Europäisches Patentamt

European Patent Office

Office européen des brevets

(11) Veröffentlichungsnummer: **0 278 259 B1**

(19)

(12) **EUROPÄISCHE PATENTSCHRIFT**

(45) Veröffentlichungstag der Patentschrift: **21.10.92**

(51) Int. Cl.⁵: **C08F 283/12**, //(C08F283/12, 220:06)

(21) Anmeldenummer: **88100650.6**

(22) Anmeldetag: **19.01.88**

(54) Pfropfpolymerisate aus (Meth)Acrylsäurederivaten und Siliconharzen.

(30) Priorität: **29.01.87 DE 3702542**

(43) Veröffentlichungstag der Anmeldung:
**17.08.88 Patentblatt 88/33**

(45) Bekanntmachung des Hinweises auf die
Patenterteilung:
**21.10.92 Patentblatt 92/43**

(84) Benannte Vertragsstaaten:
**BE CH DE ES FR GB IT LI NL SE**

(56) Entgegenhaltungen:
**FR-A- 2 072 178**
**FR-A- 2 387 254**
**US-A- 4 528 301**

(73) Patentinhaber: **BAYER AG**

**W-5090 Leverkusen 1 Bayerwerk(DE)**

(72) Erfinder: **Alberts, Heinrich, Dr.**
**Schulstrasse 1a**
**W-5068 Odenthal(DE)**
Erfinder: **Schlak, Ottfried, Dr.**
**Kalkweg 2**
**W-5000 Köln 80(DE)**
Erfinder: **Gruber, Hermann, Dr.**
**Paul-Klee-Strasse 87**
**W-5090 Leverkusen 1(DE)**
Erfinder: **Kober, Hermann, Dipl.-Ing.**
**Unterscheider Weg 34**
**W-5060 Bergisch Gladbach 2(DE)**

**Beschreibung**

Die Erfindung betrifft Pfropfpolymerisate aus (Meth)Acrylsäurederivaten und alkoxifunktionellen Siliconharzen, ein Verfahren zu deren Herstellung und ihre Verwendung als Imprägniermittel, insbesondere im Bautenschutz.

Die Verwendung von Siliconharzen verschiedener Zusammensetzung als Imprägnier-, Hydrophobier- und Bautenschutzmittel ist seit langem bekannt. Besonders vorteilhaft haben sich dafür alkoxifunktionelle oligomere Siloxane erwiesen, die unter Feuchtigkeitseinwirkung, gegebenenfalls in Gegenwart eines Katalysators, vernetzen.

Ferner ist die Verwendung von Mischungen, bestehend aus Copolymerisaten des Methacrylsäuremethylesters und aus Siloxanharzen aus DE-OS 2 150 736, DE-OS 2 352 242 und DE-AS 1 671 280 für pigmentierte Anstrichmittel oder Imprägniermittel bekannt. Der Vorteil derartiger Mischungen liegt in der einfachen Zubereitungsweise, der Nachteil ist gravierend und besteht in einer eng begrenzten Verträglichkeit zwischen Siloxanharz und Polymethylmethacrylat.

Diese Unverträglichkeit der Polymeren führt zwangsläufig zu einer Entmischung der Mischungsbestandteile bei der Filmbildung und beim Eindringen in den Baustoff. Um die Unverträglichkeit und Entmischungsneigung der Komponenten einzuschränken, werden erstens aromatenreiche Lösungsmittel und zweitens eine Applikation aus stark verdünnter Lösung benötigt.

Kombinationen von Siloxanharzen und Acrylatharzen sind sehr wünschenswert. Weisen doch Siliconharze neben hoher Wasserabweisung auch eine ausgezeichnete Wasserdampfdurchlässigkeit auf, während Acrylatharze besseres Pigmentbindevermögen und einen besseren Schutz gegen z.B. Carbonatisierung gewähren. Andererseits ist die Wasserdampfdurchlässigkeit von Acrylat- bzw. Methacrylatcopolymerfilmen gering.

Anstrich- und Imprägniermittel, die die Vorteile beider Systeme vereinigen und aus verträglichen, nicht entmischenden, gut hydrolysebeständigen Kombinationen bestehen, sind daher sehr vorteilhaft und wünschenswert.

Aus DE-A 2 063 129 und DE-A 2 063 256 sind Acrylsiloxan-Harze bekannt, die durch eine Umsetzung eines funktionelle Gruppen enthaltenden Siloxanharzes mit einem Copolymeren aus Vinylmonomeren und weiterer Umsetzung des erhaltenen Harzes mit einem Monohydyoxyester eines zweiwertigen Alkohols der Acrylsäure oder Methacrylsäure erhalten werden. Die Harze werden mit Vinylmonomeren in Lösung durch Elektronenstrahl zu Filmen vernetzt.

Aus US-A 4,528,301 ist ein Material für Kontaktlinsen bekannt, das aus einem Copolymerisat aus ggf. substituiertem Styrol, Vinylalkohol, Polyethylenglykol und einen, ggf. substituierten Polydimethylsiloxan oder Silan besteht, wobei die Copolymerisation durch UV-Strahlung bewirkt wird.

Aufgabe der Erfindung war es, verträgliche Siliconacrylatharzkombinationen für durch Umgebungsfeuchtigkeit vernetzende Imprägniermittel und Fassadenanstrichmittel bereitzustellen.

Die Aufgabe konnte durch Bereitstellung von hydrolysestabil verknüpften Alkoxisiliconharz-(Meth)acrylatpfropfpolymerisaten gelöst werden.

Gegenstand der Erfindung sind somit Alkoxisiliconharz(Meth)acrylatpfropfpolymerisate, ein Verfahren zu ihrer Herstellung und ihre Verwendung als Anstrich- und Imprägniermittel.

Gegenstand der Erfindung sind Pfropfpolymerisate, bei denen eine Pfropfharzkomponente an ein Silikonharz über eine hydrolisestabile Si-C Bindung gebunden ist, erhältlich durch radikalische Polymerisation von

1. 10 - 90 Gew.-%, vorzugsweise 30-65 Gew.-%, eines oligomeren alkoxifunktionellen Siliconharzes und
2. 90 - 10 Gew.-%, vorzugsweise 35-70 Gew.-%, eines Gemisches von (Meth)Acrylsäurederivaten und weiteren Vinylverbindungen,

wobei die Summe der Komponenten stets 100 Gew.-% beträgt,
und wobei das alkoxifunktionelle Siliconharz der allgemeinen Formel

$$R_x Si(OR')_y O_{\frac{4-x-y}{2}}$$

entspricht und
x einen Wert von 0,75 bis 1,7 und
y einen Wert von 0,2 bis 2 besitzt und wobei

R     einen linearen oder verzweigten Alkylrest mit 1 - 20 C-Atomen, einen Alkylarylrest und/oder einen gegebenenfalls substituierten Arylrest bedeutet,

R'    einen linearen oder verzweigten Alkylrest mit 1 bis 18 C-Atomen bedeutet und wobei das Gemisch aus (Meth)Acrylsäure und Vinyl-Derivaten zusammengesetzt ist aus:

a) 0,2 - 99,8 Gew.-%, vorzugsweise 15 - 95 Gew.-% Methacrylsäureestern,

b) 99,8 - 0,2 Gew.-%, vorzugsweise 95 - 15 Gew.-% Acrylsäureestern,

c) 0 - 80 Gew.-%, vorzugsweise 0 - 20 Gew.-% (Meth)acrylsäure, (Meth)acrylamid, (Meth)acrylnitril, Vinylaromaten, $\alpha$-Olefinen, Vinylestern, Allylverbindungen, iso-Propenylverbindungen oder ihre polyfunktionellen Derivate mit (Meth)Acrylsäurealkylestern oder ihren Gemischen,

ferner ein Verfahren zu ihrer Herstellung durch radikalische Pfropfpolymerisation in Lösung oder Substanz und die Verwendung der so erhaltenen Pfropfpolymerisate als Imprägnier- oder Anstrichmittel, insbesondere im Bautenschutz.

Die erfindungsgemäß als Pfropfgrundlage verwendeten Siliconharze sind bekannte Produkte, deren Herstellung in W. Noll, Chemie und Technologie der Silicone, 2. Auflage, Verlag Chemie, Weinheim, 1968, S. 551 ff beschrieben wird, als Alkoxigruppe können, wahlweise Methoxi-, Ethoxi-, Isopropoxi-oder Butoxigruppen vorhanden sein. Aus wirtschaflichen Gründen und wegen ihrer hohen Reaktivität ist dabei die Methoxi-Gruppe besonders bevorzugt. Desgleichen enthalten die Siliconharze am Silicium neben Methyl- und Phenyl-, Alkylsubstituenten mit linearen oder verzweigten Ketten der allgemeinen Formel $C_nH_{2n + 1}$ mit n = 2 - 20. Besonders bevorzugt sind solche Siliconharze, welche verzweigte Alkylsubstituenten am Si-Atom aufweisen. Ferner können in den Siliconharzen tri- oder tetrafunktionelle Verzweigungsstellen enthalten sein. Die Viskositäten von Lösungen dieser Harze in Alkoholen oder Kohlenwasserstoffen sind niedrig, um gute Penetration, z.B. in den Baustoffen zu gewährleisten. Bei einem Feststoffanteil nach Hydrolyse der Alkoxigruppen von 60 - 65 Gew.-% liegt die Viskosität der vorzugsweise verwendeten Lösungen unter 2000 mPa.s, vorzugsweise unter 200 mPa.s.

Als Lösungsmittel kommen vorzugsweise aromatische Kohlenwasserstoffe, aliphatische Kohlenwasserstoffe, Alkohole wie Ethanol oder Isopropanol, Ester wie Butylacetat oder ihre Gemische in Frage.

Als erfindungsgemäß für die Pfropfreaktion einzusetzende Monomere sind Acrylsäure, Methacrylsäure und ihre Derivate, vorzugsweise ihre Alkylester, zu nennen. Als Alkylester sind die Methyl-, Ethyl-, Isopropyl-, Propyl-, n-Butyl-, Isobutyl- und hohe Alkylester mit bis zu 25 C-Atomen in der Alkylkomponente aufzuführen. OH-funktionelle Esterderivate der Acryl- und Methacrylsäure werden ebenfalls eingesetzt. Besondere Effekte lassen sich durch Copolymerisation von gegebenenfalls Mischungen aus Vinylaromaten wie Styrol oder $\alpha$-Methylstyrol, (Meth)Acrylnitril, (Meth)Acrylsäure oder Vinylacetat, $\alpha$-Olefinen, Allyl- und Isopropenyl-Verbindungen oder ihren polyfunktionellen Derivaten mit den (Meth)Acrylsäurealkylestern erzielen.

Die Polymerisation kann durch die bekannten Radikalstarter auf Basis von Azoverbindungen oder peroxidischen Verbindungen, wie z.B. Dibenzoylperoxid, 4,4′-Dichlorbenzoylperoxid, di- tert.-Butylperoxid, Dicumylperoxid, tert.-Butylpivalat, tert.-Butylperoctoat, Cyclohexylpercarbonat oder Redoxsystemen, bestehend aus peroxidisches oder hydroperoxidischer Komponente einerseits und Reduktionsmittel andererseits, bei Temperaturen zwischen -80° C und +250° C gestartet werden, bevorzugte Polymerisationstemperaturen sind +50° C bis +180° C. Die Polymerisation kann ferner fotochemisch oder durch Strahlungsaktivierung ausgelöst werden. Die Polymerisation wird in Lösung oder ohne Lösungsmittelzusatz durchgeführt. Als Lösungsmittel kommen die bereits angeführten aliphatischen oder aromatischen Kohlenwasserstoffe, Alkohole, Ketone oder Ester in Frage. Bevorzugt sind die Lösungsmittel oder Lösungsmittelgemische, deren Flammpunkt nach DIN oberhalb 21° C liegt.

Das Molekulargewicht der Pfropfpolymerkomponente wird durch die Reaktionstemperatur, Lösungsmittel, Initiatortyp und -menge und gegebenenfalls durch Molekulargewichtsregler gesteuert. Die Pfropfreaktion selbst und die Pfropfausbeute können durch Pfropfaktivatoren gesteuert werden. Als Pfropfaktivatoren kommen pfropf- und übertragungsaktive Monomere in Frage. Genannt seien als Pfropfaktivatoren Allylverbindungen wie Allylalkohol, Allylacetat und andere Allylester aliphatischer oder aromatischer Carbonsäuren, Allylcarbonatderivate, Diallyl- und Polyallylverbindungen wie Diallylphthalat, Triallylcyanurat, Triallylcitrat, Allylether und Diallylether. Wichtige Pfropfaktivatoren sind ferner Vinylacetat, Acrylnitril, Vinylchlorid, Ethylen, Propen, Isobutylen oder Buten-1 und Diisobutylen als Beispiele aus der Reihe aktiver $\alpha$-Olefine. Die erfindungsgemäße Pfropfreaktion wird vorzugsweise unter Verwendung von 0,01 bis 20 Gew.-%, bezogen auf die Gesamtsumme der eingesetzten Reaktionskomponenten an Pfropfaktivatoren durchgeführt und auch die so erhaltenen Produkte und das so durchgeführte Verfahren werden gesondert beansprucht.

Durch die Pfropfreaktion gelingt es, die an und für sich unverträglichen Acrylat- und Alkoxisiloxanharzkomponenten zu einem klarfilmverträglichen Beschichtungsharz zusammenzuführen.

Die bereits beschriebenen Mischungen aus speziellen Siliconharzen (DE-OS 2 352 242) und Polymethacrylsäuremethylester (DE-AS 1 671 280) können nur aus speziellen Lösungsmittelkombinationen mit geringem Festkörpergehalt oder nur in bestimmten Kombinationen als Fassadenschutzfarbe eingesetzt werden. Physikalisch handelt es sich um Gemische unverträglicher Polymerer. Durch die Pfropfreaktion ist eine drastische Verbesserung der Verträglichkeit der Siliconharz- und Acrylatharzkomponente erzielbar. Durch die Anbindung der Pfropfharzkomponente an das Siliconharz über eine hydrolysestabile Si-C-Bindung wird ferner eine Entmischung der Silicon- und der Acrylatharzkomponente vermieden, so daß auch im gesamten Eindringbereich der Baustoff ausreichend geschützt wird. Ferner ist es möglich, durch Versetzen der Pfropfpolymerlösung mit anorganischen oder organischen Farbpigmenten, die unter den in der Technik üblichen Bedingungen erfolgt, ein pigmentiertes Anstrichmittel mit hoher Farbtonbeständigkeit und Glanzerhaltung zu erhalten.

Die erfindungsgemäßen Imprägnier- und Anstrichmittel sind durch Umgebungsfeuchtigkeit vernetzbar. Zur Beschleunigung der Vernetzungsreaktion werden Katalysatorren eingesetzt. Diese Katalysatoren sind bekannt und werden z.B. in W. Noll, Chemie und Technologie der Silicone, 2. Auflage 1968, S. 181 ff, beschrieben. I0m allgemeinen werden als Vernetzungskatalysatoren lösliche metallorganische Verbindungen wie Sn-, Mn- oder Fe-Derivate verwendet. Die Katalysatormenge, bezogen aus Festkörper, hängt von verschiedenen Faktoren wie Substituenten, gewünsche Filmhärte und Aushärtezeit ab und beträgt üblicherweise 0,01 - 5 Gew.-%, vorzugsweise 0,5 - 2 Gew.-%.

Verwendung finden die erfindungsgemäßen Pfropfpolymeren als Imprägniermittel für Baustoffe und Beton, ferner als Fassadenanstrichmittel.

Der Gegenstand der vorliegenden Erfindung soll anhand der folgenden Beispiele noch näher erläutert werden.

Für die im folgenden beschriebenen Versuche werden die den folgenden Formeln entsprechenden Siliconharze verwendet:

Siliconharz A: $(Me)_{0.7}(i\text{-}Bu)_{0.3}Si(O)_{1.05}(OMe)_{0.9}$

Me = Methylrest

i-Bu = Isobutylrest

Siliconharz B: $MeSi(O)_{1.1}(OMe)_{0.8}$

Siliconharz C: $(Me)_{1.0}R_{0.2}R'_{0.1}Si(O)_{1.0}(OMe)_{0.7}$

R = $C_{12}$-Alkylrest

R' = $C_{14}$-Alkylrest

Die in den Beispielen angegebenen Feststoffgehalte wurden nach Abspaltung der Alkoxigruppen, durch Hydrolyse der Alkoxigruppen, durch Hydrolyse mittels alkoholischer Salzsäure, Abdampfen der Säure und der flüchtigen Anteile über 3 Stunden bei 105°C im Trockenschrank ermittelt.

Wenn nicht anders angegeben, sind die Viskositäten der Pfropfpolymerlösungen mit dem Haake-Viskotester bis 23°C gemessen worden.

Beispiel 1:

Unter Stickstoffüberleitung werden

11 kg Siliconharz A (100 %ig)

2,5 kg Testbenzin (Benzinfraktion mit dem Siedepunktsbereich 155°C-185°C)

auf 100°C aufgeheizt.

Dann werden gleichzeitig und gleichmäßig 2 Lösungen innerhalb von 2 Stunden hinzugepumpt:

Lösung 1: 5,1 kg Isobutylmethacrylat

1,0 kg n-Butylacrylat

1,0 kg Hydroxipropylmethacrylat

Lösung 2: 4,4 kg Testbenzin (Benzinfraktion 155°C-185°C)

0,2 kg tert.-Butylperoctoat

0,25 kg ditert. Butylperoxid

Dann wird die Reaktion

1 Stunde bei 120°C

und 2 Stunden bei 130°C

zu Ende geführt.

Nach dem Abkühlen wird mit 150 g Dibutylzinndilaurat katalysiert. Danach weist das Produkt eine Viskosität von 172 mPa.s und einen Feststoffgehalt von 60,5 % auf. Ein mit dieser Lösung hergestellter Film ist hochtransparent, weist vorzügliche Sperreigenschaften gegen Wasser und $CO_2$ auf und besitzt hohe Wasserdampfdurchlässigkeit.

Beispiel 2:

In einem 5 1-Reaktor werden unter Stickstoff
1,6 kg Siliconharz A
0,4 kg Testbenzin (Benzinfraktion 155 - 185°C)
auf 112°C aufgeheizt.

Lösungen 1 und 2 werden innerhalb von 2 Stunden hinzugepumpt:

Lösung 1:   800 g Isobutylmethacrylat
            200 g Methylmethacrylat
            175 g n-Butylacrylat
            150 g $\beta$-Hydroxyethylmethacrylat
Lösung 2:   1 kg Testbenzin
            35 g tert.-Butylperoctoat

Nach beendeter Zugabe wird 2 Stunden bei 112°C und 1 Stunde bei 120°C nachgerührt.

Nach dem Abkühlen weist das Produkt einen Feststoffgehalt von 61,0 Gew.-% und eine Viskosität von 1700 mPa.s auf. Nach Zusatz von 0,5 Gew.-%, bezogen auf Festkörpergehalt, Dibutylzinndilaurat ist der Film nach 24 Stunden vollständig ausgehärtet und hochtransparent.

Beispiel 3

Prüfung als wasserabweisendes Imprägniermittel für mineralische Baustoffe

Ein gemäß dem vorstehend beschriebenen Verfahren hergestelltes Pfropfpolymer mit der in Beispiel 1 aufgeführten Zusammensetzung wird mit Testbenzin auf ca. 9 Gew.-% verdünnt. Es werden Probekörper verschiedener Baustoffe durch einmaliges Eintauchen in die Imprägnierlösung präpariert. Die Tauchzeit beträgt 30 Sekunden. Die so vorbereiteten Proben werden 6 Tage bei 23° C und ca. 50 % rel. Feuchte gelagert und anschließend bei 50°C über 24 Stunden getrocknet.

Danach wird das kapillare Aufsaugen von Wasser bei einer Eintauchtiefe von 3 mm bestimmt.

Im Vergleich zu den unbehandelten Probekörpern (Werte in Klammern) werden folgende Ergebnisse erhalten.

## Wasseraufnahme in Gew.-%

|                | 2 Stunden |        | 6 Stunden |        | 24 Stunden |        |
|----------------|-----------|--------|-----------|--------|------------|--------|
| Kalkzementputz | 0,6       | (11,4) | 0,7       | (11,6) | 1,0        | (11,6) |
| Zementmörtel   | 0,3       | ( 6,1) | 0,5       | ( 6,4) | 0,8        | ( 6,4) |
| Kalksandstein  | 0,3       | (11,9) | 0,5       | (12,0) | 0,9        | (12,2) |

Aus den Werten ergibt sich, daß die unbehandelten Baustoffe bereits nach 2 Stunden wassergesättigt sind, während die mit dem erfindungsgemäßen Pfropfpolymer behandelten Prüfkörper auch nach 24-stündiger Wasserlagerung nur geringe Gewichtszunahme zeigten.

Beispiel 3a Vergleichsversuch

Der Versuch aus Beispiel 3 wird wiederholt unter Verwendung einer 9 %igen Lösung eines durch Polymerisation von Isobutylmethacrylat hergestellten Harzes.

5

## Wasseraufnahme in Gew.-%

|  | 2 Stunden | 6 Stunden | 24 Stunden |
|---|---|---|---|
| Kalkzementputz | 0,8 (11,4) | 1,5 (11,6) | 2,9 (11,6) |
| Zementmörtel | 0,4 ( 6,1) | 1,0 ( 6,4) | 2,4 ( 6,4) |
| Kalksandstein | 0,4 (11,9) | 0,8 (12,0) | 1,8 (12,2) |

Aus den Werten ergibt sich, daß die im Beispiel 3 nachgewiesene gute Hydrophobierung nicht erreicht wird.

Beispiel 4

Prüfung auf Wasserdampf- und Kohlendioxiddurchlässigkeit

Die Prüfung der Diffusionswiderstandszahlen $\mu$ erfolgt in Anlehnung an DIN 53 122 und ergibt bei Verwendung der Lösung des Pfropfpolymerisates aus Beispiel 3 folgende Werte

| $\mu\ H_2O$ | 2.460 |
|---|---|
| $\mu\ CO_2$ | 2.350.000 |

Beispiel 4a Vergleichsversuch

Die Prüfung des Beispiels 4 wird wiederholt unter Verwendung eines handelsüblichen Imprägniermittels auf Basis Polysiloxan (A) sowie des im Beispiel 3a verwendeten Isobutylmethacrylat-Polymers (B)

$$\mu\ H_2O \quad (A) \quad 0 \quad (B) \quad 26.500$$
$$\mu\ CO_2 \quad (A) \quad 0 \quad (B) \quad 2.000.000$$

Die gefundenen Werte zeigen, daß das erfindungsgemäße Pfropfpolymer das Eindringen von Kohlendioxid in den Baustoff einen hohen Widerstand entgegensetzt, während die Wasserdampfdurchlässigkeit kaum behindert ist. Dieses Eigenschaftsprofil ist erwünscht (Vermeidung von Carbonisationsschäden).

Aus den Vergleichsversuchen ergibt sich, daß handelsübliche Imprägniermittel auf Polysiloxan-Basis keinen Carbonisationsschutz aufweisen, während reine Polyacrylatharze zwar einen ausreichenden Karbonisationsschutz aber nicht die für den Bautenschutz geforderte hohe Wasserdampfdurchlässigkeit zeigen.

Literatur:     R. Engelfried Defazet Heft 9 - 1977 Seiten 353-359.

Beispiel 5

Herstellung eines pigmentierten Bautenschutzlackes

Die in den Beispielen 3 und 4 nachgewiesenen guten bauphysikalischen Eigenschaften erlauben die Herstellung einer pigmentierten Fassadenbeschichtung, die beispielhaft nach folgender Rezeptur hergestellt wird:

| Pfropfpolymerisat 60 %ige Lösung in Testbenzin | 300,00 Gew.-Teile |
|---|---|
| Titandioxid Rutiltype | 75,59 Gew.-Teile |
| Eisenoxidpigment (gelb) | 5,94 Gew.-Teile |
| Eisenoxidpigment (schwarz) | 5,94 Gew.-Teile |
| Chromoxidgrün | 1,84 Gew.-Teile |
| Talkum | 56,69 Gew.-Teile |
| Lösemittel zur Korrektur der Viskosität | 40 bis 100,00 Gew.-Teile |

Die Applikation erfolgt durch Streichen. Es werden 2 Anstriche im Abstand von 24 Stunden aufgetragen. Die Trockenfilmdicke beträgt 80 bis 120 $\mu$m. Die Prüfung in einem Kurzbewitterungsgerät nach DIN 53 231 ergibt nach einer Prüfzeit von 2.000 Stunden keine sichtbaren Veränderungen.

**Patentansprüche**

**1.** Pfropfpolymerisate, bei denen eine Pfropfharzkomponente an ein Silikonharz über eine hydrolisestabile Si-C- Bindung gebunden ist, erhältlich durch radikalische Polymerisation von
1. 10-90 Gew.-% eines oligomeren alkoxifunktionellen Siliconharzes der allgemeinen Formel

$$R_x Si(OR')_y \frac{O_{4-x-y}}{2} \quad,$$

wobei
x = 0,75-1,7;
y = 0,2-2;
R einen linearen oder verzweigten Alkylrest mit 1-20 C-Atomen, einen Aralkylrest oder einen gegebenenfalls substituierten Arylrest mit bis zu 20 C-Atomen bedeutet und
R' einen linearen oder verzweigten Alkylrest mit 1-18 C-Atomen darstellt,
und
2. 90-10 Gew.-% eines Gemisches von
a) 0,2-99,8 Gew.-% Methacrylsäureestern,
b) 99,8-02 Gew.-% Acrylsäureestern,
c) 0-80 Gew.-% (Meth)acrylsäure. (Meth)acrylamid, (Meth)-acrylnitril, Vinylaromaten, $\alpha$-Olefinen, Vinylestern, Allylverbindungen, iso-Propenylverbindungen oder ihre polyfunktionellen Derivate mit (Meth)Acrylsäurealkylestern oder ihren Gemischen,
wobei die Summe der Komponenten stets 100 Gew.-% beträgt.

**2.** Pfropfpolymerisate nach Anspruch 1, dadurch gekennzeichnet, daß das alkoxifunktionelle Siliconharz 1) in einer Menge von 30-65 Gew.-% eingesetzt wird.

**3.** Pfropfpolymerisate gemäß einem der Ansprüche 1 oder 2, dadurch gekennzeichnet, daß das Gemisch 2) zusammengesetzt ist aus:
a) 15-95 Gew.-% Methacrylsäureestern,
b) 95-15 Gew.-% Acrylsäureestern,
c) vorzugsweise 0-20 Gew.-% (Meth)acrylsäure, (Meth)acrylamid, (Meth)-acrylnitril, Vinylaromaten, $\alpha$-Olefinen, Vinylestern, Allylverbindungen, iso-Propenylverbindungen oder ihre polyfunktionellen Derivate oder ihren Gemischen.

**4.** Verfahren zur Herstellung von Pfropfpolymerisaten gemäß einem der Ansprüche 1-3, dadurch gekennzeichnet, daß die Polymerisation in einem Lösungsmittel durchgeführt wird.

**5.** Verwendung von Pfropfpolymerisaten gemäß einem der Ansprüche 1 bis 4 als Imprägniermittel.

**6.** Verwendung von Pfropfpolymerisaten gemäß einem der Ansprüche 1 bis 4 als Bautenschutzmittel.

**Claims**

1. Graft polymers in which a graft resin component is attached to a silicone resin via a hydrolysis stable Si-C bond, obtainable by the radical polymerisation of

   1. from 10-90% by weight of an oligomeric alkoxy functional silicone resin corresponding to the general formula

$$R_xSi(OR')_yO\frac{4-x-y}{2} \quad ,$$

   wherein
   x = 0.75-1.7,
   y = 0.2-2,
   R    denotes a straight chain or branched alkyl group having 1-20 C-atoms, an aralkyl group or an optionally substituted aryl group having up to 20 C-atoms and
   R'   denotes a straight chain or branched alkyl group having 1-18 C-atoms and
   2. from 90-10% by weight of a mixture of
      a) from 0.2-99.8% by weight of methacrylic acid esters,
      b) from 99.8-0.2% by weight of acrylic acid esters and
      c) from 0-80% by weight of (meth)acrylic acid, (meth)acrylamide, (meth)acrylonitrile, aromatic vinyl compounds, α-olefins, vinyl esters, allyl compounds, isopropenyl compounds or polyfunctional derivatives thereof with (meth)acrylic acid alkyl esters or their mixtures,
   the sum of the components always amounting to 100% by weight.

2. Graft polymers according to Claim 1, characterised in that the alkoxy functional silicone resin 1) is used in a quantity of from 30-65% by weight.

3. Graft polymers according to one of the Claims 1 or 2, characterised in that mixture 2) is composed of
      a) from 15-95% by weight of methacrylic acid esters,
      b) from 95-15% by weight of acrylic acid esters and
      c) preferably from 0-20% by weight of (meth)-acrylic acid, (meth)acrylamide, (meth)acrylonitrile, aromatic vinyl compounds, α-olefins, vinyl esters, allyl compounds, iso-propenyl compounds or their polyfunctional derivatives or mixtures thereof.

4. A process for the preparation of graft polymers according to one of the Claims 1 to 3, characterised in that polymerisation is carried out in a solvent.

5. The use of graft polymers according to one of the Claims 1 to 4 as impregnating agents.

6. The use of graft polymers according to one of the Claims 1 to 4 as building protective agents.

**Revendications**

1. Polymères greffés dans lesquels un composant de résine greffée est lié à un composant de résine de silicone par une liaison Si-C stable à l'hydrolyse, pouvant être obtenus par polymérisation radicalaire de:

   1. 10 - 90% en poids d'une résine de silicone oligomère à fonctionnalité alcoxy, répondant à la formule générale:

$$R_xSi(OR')_yO\frac{4-x-y}{2}$$

   dans laquelle

x = 0,75 à 1,7;

y = 0,2 à 2;

R signifie un reste alkyle à chaîne linéaire ou ramifiée avec 1 à 20 atomes de carbone, un reste aralkyle ou un reste aryle éventuellement substitué, avec jusqu'à 20 atomes de carbone, et

R' représente un reste alkyle à chaîne linéaire ou ramifiée avec 1 à 18 atomes de carbone,

et

2. 90 à 10% en poids d'un mélange de

a) 0,2 à 99,8% en poids d'esters méthacryliques,

b) 99,8 à 0,2% en poids d'esters acryliques,

c) 0 à 80% en poids d'acide (méth)acrylique, de (méth)acrylamide, de (méth)acrylonitrile, d'hydrocarbures aromatiques vinyliques, d'$\alpha$-oléfines, d'esters vinyliques, de composés allyliques de composés isopropényliques ou leurs dérivés polyfonctionnels avec des esters alkyliques d'acide acrylique ou leurs mélanges, la somme des composants étant toujours égale à 100%.

2. Polymères greffés selon la revendication 1, caractérisé en ce que la résine de silicone à fonctionnalité alcoxy 1) est présente à raison de 30 à 65%.

3. Polymères greffés selon l'une des revendications 1 ou 2, caractérisés en ce que le mélange 2) est composé de:

a) 15 à 95% d'esters méthacryliques,

b) 95 à 15% d'esters acryliques,

c) de préférence 0 à 20% d'acide (méth)acrylique, de (méth)acrylamide, de (méth)acrylonotrile, d'hydrocarbures aromatiques vinyliques, d'$\alpha$-oléfines, d'esters vinyliques, de composés allyliques, de composés isopropyléniques.

4. Procédé pour la fabrication de polymères greffés selon l'une des revendications 1 à 3, caractérisé en ce que la polymérisation est effectuée dans un solvant.

5. Utilisation des polymères greffés selon l'une des revendications 1 à 4 comme produits d'imprégnation.

6. Utilisation des polymères greffés selon l'une des revendications 1 à 4 comme produits de protection pour les bâtiments.